# EUROPEAN PATENT APPLICATION

(11) **EP 2 711 217 A2**
(43) Date of publication of application: **26.03.2014**
(21) Application number: 13177407.7
(22) Date of filing: 22.07.2013
(51) Int. Cl.: B60J 5/06

(54) **Vehicle door structure**

(30) Priority: 20.09.2012 JP 2012207410
(71) Applicant: Kabushiki Kaisha Toyota Jidoshokki, Kariya-shi, Aichi 448-8671 (JP)
(72) Inventor: Maruyama, Katsuya, Kariya-shi, Aichi 448-8671 (JP); Ojima, Yoshio, Kariya-shi, Aichi 448-8671 (JP)
(74) Representative: TBK

(57) **Abstract**

A vehicle door structure which can suppress the amount of entry of a guide body into a vehicle body when fully closing a slide door and increase the amount of sliding the slide door when fully opening the slide door is provided. A vehicle door structure 1 comprises a slide door 6 for opening and closing a front region of a rear door opening, a swing door 7 for opening and closing a rear region of the rear door opening in cooperation with the slide door 6, a middle slide rail 17 attached to the swing door 7 so as to extend longitudinally of the vehicle body, a guide body 18 adapted to be guided by the middle slide rail 17 when opening and closing the slide door 6, and a movable arm 34 rotatably attached to the slide door 6 and adapted to engage the guide body 18. The movable arm 34 is movable longitudinally of the vehicle body with respect to the guide body 18.

## Description

### BACKGROUND OF THE INVENTION

### Field of the Invention

The present invention relates to a vehicle door structure equipped with a slidably openable and closable slide door.

### Related Background Art

As an example of conventional vehicle door structures, one described in Japanese Patent Application Laid-Open No. 2001-113947 has been known. The vehicle door structure described in Japanese Patent Application Laid-Open No. 2001-113947 comprises a guide rail extending longitudinally of a vehicle body and having a front end part curving into the vehicle, a roller bracket provided with a slide door, and a roller body supported by a leading end part of the roller bracket and adapted to move along the guide rail.

In the vehicle door structure of the prior art mentioned above, the slide door and the roller bracket are connected to each other with an arm. Since the arm is connected to the front end part of the roller bracket here, the amount of entry of the roller body (guide body) to the inside of the vehicle at the time when the slide door is fully closed can be suppressed. Hence, it is unnecessary for the front end part (curved rail part) of the guide rail to extend long into the vehicle body, whereby a correspondingly wider space can be attained in the compartment. However, the arm connected to the front end part of the roller bracket limits the amount of sliding (amount of opening) the slide door when fully opening the slide door, thereby hindering the door opening from increasing its opening area.

It is an object of the present invention to provide a vehicle door structure which can suppress the amount of entry of the guide body into the vehicle body when fully closing the slide door and increase the amount of sliding the slide door when fully opening the slide door.

### SUWMARY OF THE INVENTION

In one aspect, the present invention provides a vehicle door structure comprising a slide door for opening and closing a region of at least a part of a door opening provided in a side or rear part of a vehicle body; the vehicle door structure further comprising a slide rail disposed so as to extend in an opening/closing direction of the slide door, a guide body adapted to be guided by the slide rail, and a movable arm rotatably attached to the slide door and adapted to engage the guide body; wherein an end part of the slide rail on a side to fully close the slide door is formed with a curved rail part curving into the vehicle body; and wherein the movable arm is constructed such that a position thereof with respect to the guide body in the slide door opening/closing direction is changeable.

For fully closing the slide door in thus constructed vehicle door structure of the present invention, the movable arm is positioned on the slide door full close side with respect to the guide body, so as to suppress the amount of entry of the guide body into the vehicle body when moving the slide door to the full close side. For fully opening the slide door, on the other hand, the movable arm is positioned on the slide door full open side with respect to the guide body, so as to suppress the amount of sliding (amount of opening) the slide door when moving the slide door to the full open side.

One embodiment may be constructed such that the guide body is provided with a guide rail part extending in the slide door opening/closing direction, while the movable arm is provided with a slider part movable in the slide door opening/closing direction along the guide rail part. In this case, moving the slider part in the slide door opening/closing direction along the guide rail part can easily change the position of the movable arm in the slide door opening/closing direction with respect to the guide body.

One embodiment may further comprise a swing door for opening and closing the other region of the door opening in cooperation with the slide door, the slide rail being attached to the swing door. In this case, the present invention can easily be applied to a vehicle door structure comprising a slide door and a swing door.

The present invention can suppress the amount of entry of the guide body into the vehicle body when fully closing the slide door, which makes it unnecessary to secure a large space for the curved part of the guide rail on the inside of the vehicle body, whereby the space within the compartment can be expanded. It can also enhance the amount of sliding (amount of opening) the slide door when fully opening the same, thereby increasing the opening area of the door opening.

### BRIEF DESCRIPTION OF THE DRAWINGS

Fig. 1 is a side view illustrating a vehicle equipped with one embodiment of the vehicle door structure in accordance with the present invention;

Fig. 2 is a perspective view illustrating how a slide door depicted in Fig. 1 opens and closes;

Fig. 3 is a plan view schematically illustrating the slide door and middle slide rail depicted in Fig. 1;

Fig. 4 is a sectional view illustrating the middle slide rail, guide body, and movable arm depicted in Fig. 3;

Fig. 5 is a (partly abridged) sectional view taken along the line V-V of Fig. 4;

Fig. 6 is a set of enlarged plan views illustrating the positional relationship of the movable arm with respect to the guide body when opening and closing the slide door depicted in Fig. 3; and

Fig. 7 is a set of enlarged plan views schematically illustrating a conventional vehicle door structure in which an arm rotatably attached to a slide door is integrated with a guide body.

### DESCRIPTION OF THE PREFERRED EMBODIMENTS

In the following, preferred embodiments of the vehicle door structure in accordance with the present invention will be explained in detail with reference to the drawings.

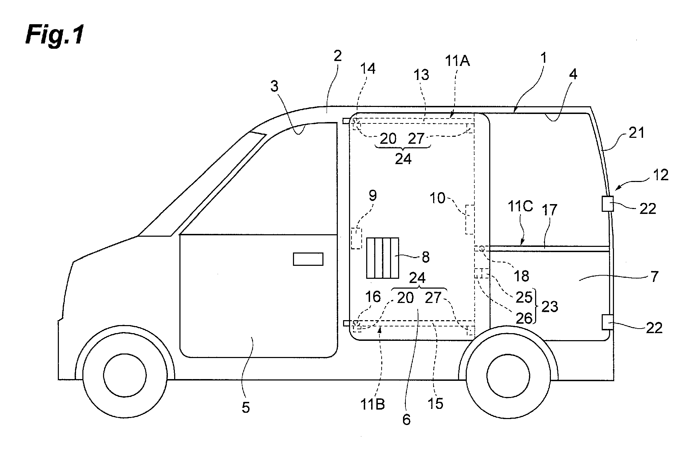

Fig. 1 is a side view illustrating a vehicle equipped with one embodiment of the vehicle door structure in accordance with the present invention. In this drawing, the vehicle door structure 1 of this embodiment is applied to a side part of a vehicle body. The side part of the vehicle body 2 is formed with a front door opening 3 located beside front seats and a rear door opening 4 located beside a luggage compartment disposed behind the front seats. The front door opening 3 is opened and closed by a front door 5.

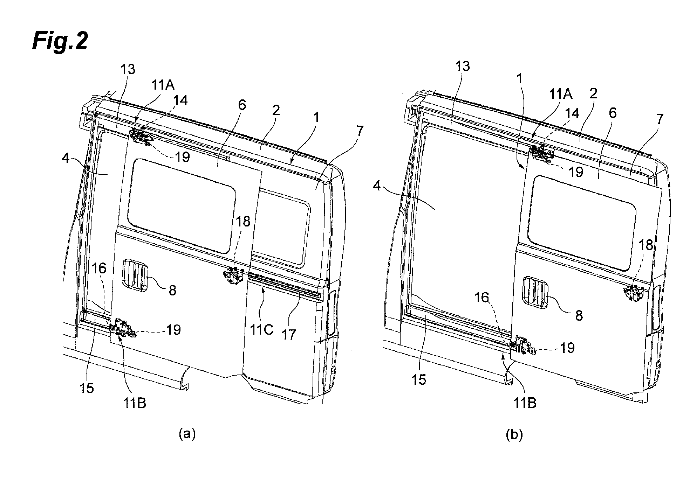

The rear door opening 4 is opened and closed by a slidably openable and closable slide door 6 and a swingably openable and closable swing door 7. The slide door 6 is constructed such as to slide longitudinally of the vehicle body 2 as illustrated in Fig. 2, thereby opening and closing a front region of the rear door opening 4. When fully opened, the slide door 6 is located on the outside of the swing door 7 and overlies the latter.

The swing door 7 is constructed so as to rotate with respect to the vehicle body 2 when the slide door 6 is fully opened to overlie the swing door 7, thereby opening and closing a rear region of the rear door opening 4 in cooperation with the slide door 6.

The outer surface of the slide door 6 is provided with an outer door opening and closing handle 8, while the inner surface of the slide door 6 is provided with an inner door opening and closing handle 9. A front end part of the swing door 7 is provided with a door opening and closing handle 10.

The vehicle door structure 1 comprises slide support mechanisms 11A to 11C for supporting the slide door 6 such that the latter is slidable longitudinally of the vehicle body 2 and a rotary support mechanism 12 for supporting the swing door 7 such that the latter is rotatable with respect to the vehicle body 2.

The slide support mechanism 11A has an upper slide rail 13 disposed in the upper part of the vehicle body 2 so as to extend longitudinally of the vehicle body 2 (in the opening/closing direction of the slide door 6) and an upper roller 14 disposed in the upper part of the front end of the slide door 6 and adapted to be guided by the upper slide rail 13 when opening and closing the slide door 6.

The slide support mechanism 11B has a lower slide rail 15 disposed in the lower part of the vehicle body 2 so as to extend longitudinally of the vehicle body 2 and a lower roller 16 disposed in the lower part of the front end of the slide door 6 and adapted to be guided by the lower slide rail 15 when opening and closing the slide door 6.

The slide support mechanism 11C has a middle slide rail 17 provided with the swing door 7 so as to extend longitudinally of the vehicle body 2 and a guide body 18 disposed in a rear end part of the slide door 6 and adapted to be guided by the middle slide rail 15 when opening and closing the slide door 6. Structures of the middle slide rail 15 and guide body 18 will be explained later in detail.

As illustrated in Fig. 2, the rollers 14, 16 are supported so as to be freely rotatable by respective brackets 19 attached to the upper and lower parts of the front end of the slide door 6. Latches 20 (see Fig. 1) are attached to the brackets 19.

The rotary support mechanism 12 has two, i.e., upper and lower, hinges 22 for rotatably connecting a rear pillar 21, which is provided in a rear end part of the vehicle body 2, and the swing door 7 to each other.

The vehicle door structure 1 further comprises a lock mechanism 23 for locking the slide door 6 and swing door 7 with each other when the slide door 6 is fully opened and two, i.e., upper and lower, lock mechanisms 24 for locking the slide door 6 and swing door 7 with each other when the slide door 6 is fully closed so as to overlie the swing door 7.

The lock mechanism 23 is constituted by a latch 25 attached to the rear end part of the slide door 6 and a striker 26 attached to the front end part of the swing door 7 and adapted to engage the latch 25. When the slide door 6 is fully closed so that the latch 25 engages the striker 26, the slide door 6 and swing door 7 are locked with each other. The lock on the slide door 6 and swing door 7 can be released by operating the outer door opening and closing handle 8 or inner door opening and closing handle 9.

The lock mechanisms 24 are constituted by the two latches 20 respectively attached to the upper and lower parts of the front end of the slide door 6 and two strikers 27 respectively attached to the upper and lower parts of the front end of the swing door 7 and adapted to engage the latches 20. When the slide door 6 is fully opened so that the latches 20 engage the strikers 27, the slide door 6 and swing door 7 are locked with each other. The lock on the slide door 6 and swing door 7 can be released by operating the outer door opening and closing handle 8 or inner door opening and closing handle 9.

When the slide door 6 is fully opened so that the lock mechanisms 24 lock the slide door 6 and swing door 7 with each other, the upper and lower rollers 14, 16 disengage from rear end parts of the upper and lower slide rails 13, 15, respectively. As a consequence, the slide door 6 is supported by the swing door 7 alone through the lock mechanisms 24, middle slide rail 17, and guide body 18, so as to be rotatable integrally with the swing door 7.

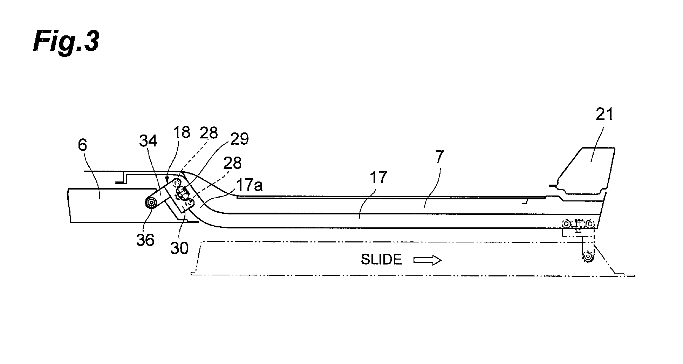

As illustrated in Fig. 3, the middle slide rail 17 is attached to the swing door 7 so as to extend longitudinally of the vehicle body 2 (in the opening/closing direction of the slide door 6). A front end part (end part on the slide door 6 full close side) of the middle slide rail 17 is formed with a curved rail part 17a curving into the vehicle body 2. Therefore, when the slide door 6 is slid from its full close state to the rear side of the vehicle body 2 so as to open, it moves to the outside of the vehicle body 2 and overlies the swing door 7 as mentioned above.

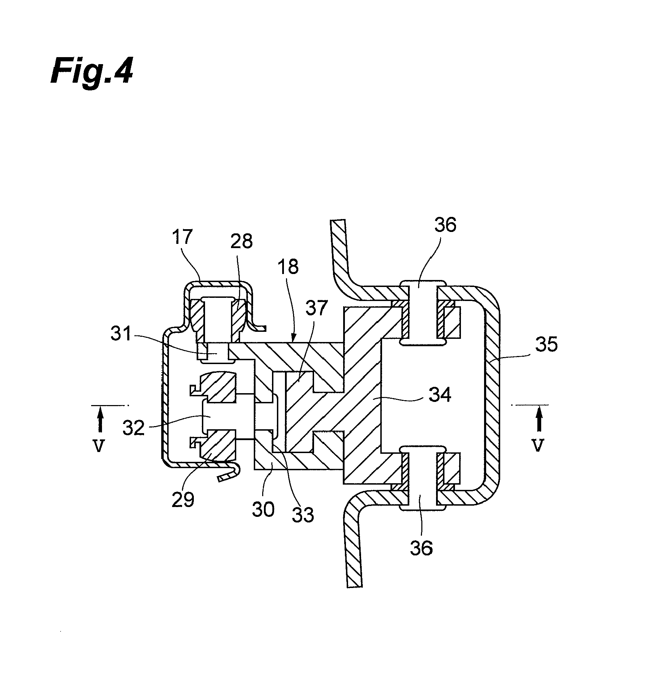

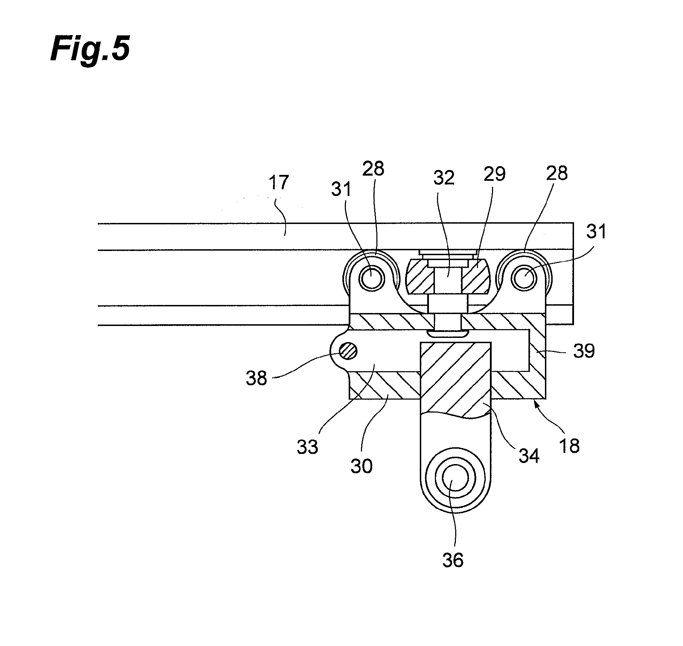

The middle slide rail 17 slidably supports the guide body 18. As illustrated in Figs. 4 and 5, the guide body 18 has a pair of, i.e., front and rear, horizontal rollers 28 and a vertical roller 29 which are guided by the middle slide rail 17. The vertical roller 29 is arranged between the pair of horizontal rollers 28. The horizontal rollers 28 and vertical roller 29 are supported so as to be freely rotatable by a bracket 30 through pins 31, 32, respectively. The bracket 30 is formed with a guide rail part 33 having a U-shaped cross section and extending longitudinally of the vehicle body 2.

As illustrated in Figs. 3 to 5, a movable arm 34 is attached to the rear end part of the slide door 6 through an attachment base 35 having a hat-shaped cross section and upper and lower pins 36 so as to be rotatable about an axis extending vertically of the vehicle body 2.
A leading end part of the movable arm 34 is provided with a slider part 37 adapted to engage the guide rail part 33 of the bracket 30. The slider part 37 is movable longitudinally of the guide body 18 (in the opening/closing direction of the slide door 6) along the guide rail part 33. This can change the longitudinal position of the movable arm 34 with respect to the guide body 18. Figs. 4 and 5 omit the slide door 6, while Fig. 5 further omits the attachment base 35.

A front end part of the bracket 30 is provided with a stopper pin 38 for regulating the movement of the slider part 37 with respect to the front side of the bracket 30. A rear end part of the bracket 30 is provided with a stopper wall 39 for regulating the movement of the slider part 37 with respect to the rear side of the bracket 30.

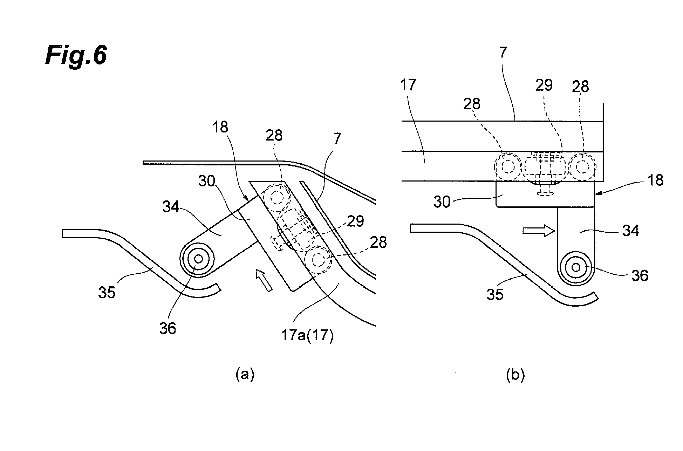

When fully closing the slide door 6 by sliding it to the front side of the vehicle body 2 in thus constructed vehicle door structure 1, the movable arm 34 is moved to the front end side of the guide body 18 as illustrated in Figs. 3 and 6(a). Here, the lock mechanism 23 locks the slide door 6 with respect to the vehicle body 2 and swing door 7, whereby the position of the movable arm 34 is held on the front end side of the guide body 18. Fig. 6(a) omits the slide door 6.

When fully opening the slide door 6 by sliding it to the rear side of the vehicle body 2, on the other hand, the movable arm 34 is moved to the rear end side of the guide body 18 as illustrated in Figs. 3 and 6(b). Here, the lock mechanisms 24 lock the slide door 6 with respect to the swing door 7, whereby the position of the movable arm 34 is held on the rear end side of the guide body 18. Fig. 6(b) also omits the slide door 6.

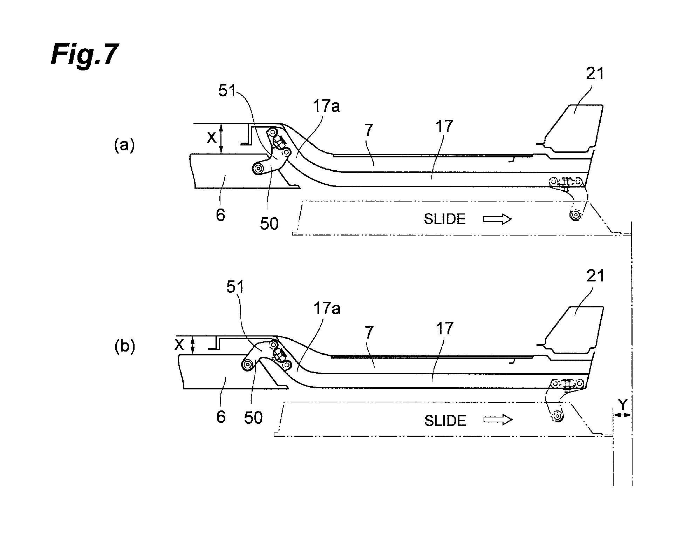

In the conventional vehicle door structure, an arm rotatably attached to the rear end part of the slide door is integrated with the guide body. In the one illustrated in Fig. 7(a), an arm 50 rotatably attached to a rear end part of the slide door 6 is secured to a rear end part of a guide body 51. In the one illustrated in Fig. 7(b), the arm 50 rotatably attached to the rear end part of the slide door 6 is secured to a front end part of the guide body 51.

In the case where the arm 50 is secured to the rear end part of the guide body 51, the amount of sliding the slide door 6 for fully opening the same is greater than that in the case where the arm 50 is secured to the front end part of the guide body 51, whereby the opening area of the front region of the rear door opening 4 can be increased. In the case where the arm 50 is secured to the rear end part of the guide body 51, however, the amount of entry X of the guide body 51 to the inside of the vehicle body 2 when fully closing the slide door 6 is greater than that in the case where the arm 50 is secured to the front end part of the guide body 51, which makes it necessary for the curved rail part 17a of the middle slide rail 17 to extend long into the vehicle body 2, thereby correspondingly narrowing the luggage compartment space.

In the case where the arm 50 is secured to the front end part of the guide body 51, on the other hand, the amount of entry X of the guide body 51 to the inside of the vehicle body 2 when fully closing the slide door 6 is smaller than that in the case where the arm 50 is secured to the rear end part of the guide body 51, which makes it unnecessary for the curved rail part 17a of the middle slide rail 17 to extend long into the vehicle body 2, whereby a wide luggage compartment space can be secured. In the case where the arm 50 is secured to the front end part of the guide body 51, however, the amount of sliding the slide door 6 when fully opening the same is smaller than that in the case where the arm 50 is secured to the rear end part of the guide body 51, so that the rear end of the slide door 6 is displaced forward by the decrease Y in amount of sliding, whereby the opening area of the front region of the rear door opening 4 becomes smaller.

By contrast, this embodiment is constructed such that the movable arm 34 rotatably attached to the rear end part of the slide door 6 is movable longitudinally of the guide body 18, which is guided along the middle slide rail 17, and thus can secure a wide luggage compartment space and increase the opening area of the rear door opening 4 at the same time.

That is, when fully closing the slide door 6 by sliding it to the front side of the vehicle body 2, the movable arm 34 is moved to the front end part of the guide body 18 as illustrated in Fig. 6(a), so that the amount of entry of the guide body 18 into the vehicle body 2 can be made smaller than that in the case where the movable arm 34 is located at the rear end part of the guide body 18. This makes it unnecessary for the curved rail part 17a of the middle slide rail 17 to extend long into the vehicle body 2, whereby the luggage compartment space can be made wider.

When fully opening the slide door 6 by sliding it to the rear side of the vehicle body 2, on the other hand, the movable arm 34 is moved to the rear end part of the guide body 18 as illustrated in Fig. 6(b), so that the amount of sliding the slide door 6 can be made greater than that in the case where the movable arm 34 is located at the front end part of the guide body 18. This correspondingly displaces the slide door 6 rearward and thus can increase the opening area of the front region of the rear door opening 4.

The present invention is not limited to the above-mentioned embodiment. For example, while the above-mentioned embodiment moves the movable arm 34 longitudinally of the guide body 18 so that the longitudinal position of the movable arm 24 is changeable with respect to the guide body 18, this structure is not restrictive; the movable arm 34 may be rotated so that the longitudinal position of the movable arm 24 is changeable with respect to the guide body 18.

Though the above-mentioned embodiment is constructed such that the slide door 6 opens and closes the front region of the rear door opening 4 while the swing door 7 opens and closes the rear region of the rear door opening 4 in cooperation with the slide door 6, the vehicle door structure of the present invention is also applicable to those constructed such that the slide door 6 opens and closes the rear region of the rear door opening 4 while the swing door 7 opens and closes the front region of the rear door opening 4 in cooperation with the slide door 6. The vehicle door structure of the present invention is also applicable to those equipped with slide and swing doors for opening and closing a door opening provided in the rear part of the vehicle body 2.

The vehicle door structure of the present invention is also applicable to the one in which only a slide door opens and closes a door opening provided in a side or rear part of the vehicle body without the swing door.
A vehicle door structure which can suppress the amount of entry of a guide body into a vehicle body when fully closing a slide door and increase the amount of sliding the slide door when fully opening the slide door is provided. A vehicle door structure 1 comprises a slide door 6 for opening and closing a front region of a rear door opening, a swing door 7 for opening and closing a rear region of the rear door opening in cooperation with the slide door 6, a middle slide rail 17 attached to the swing door 7 so as to extend longitudinally of the vehicle body, a guide body 18 adapted to be guided by the middle slide rail 17 when opening and closing the slide door 6, and a movable arm 34 rotatably attached to the slide door 6 and adapted to engage the guide body 18. The movable arm 34 is movable longitudinally of the vehicle body with respect to the guide body 18.

## Claims

1. A vehicle door structure comprising a slide door for opening and closing a region of at least a part of a door opening provided in a side or rear part of a vehicle body, the vehicle door structure further comprising:
a slide rail disposed so as to extend in an opening/closing direction of the slide door,
a guide body adapted to be guided by the slide rail, and
a movable arm rotatably attached to the slide door and adapted to engage the guide body;
wherein an end part of the slide rail on a side to fully close the slide door is formed with a curved rail part curving into the vehicle body; and
wherein the movable arm is constructed such that a position thereof with respect to the guide body in the slide door opening/closing direction is changeable.

2. A vehicle door structure according to claim 1, wherein the guide body is provided with a guide rail part extending in the slide door opening/closing direction; and
wherein the movable arm is provided with a slider part movable in the slide door opening/closing direction along the guide rail part.

3. A vehicle door structure according to claim 1 or 2, further comprising a swing door for opening and closing the other region of the door opening in cooperation with the slide door;
wherein the slide rail is attached to the swing door.
